# EUROPEAN PATENT APPLICATION

(11) **EP 1 079 249 A2**
(43) Date of publication of application: **28.02.2001**
(21) Application number: 00303624.1
(22) Date of filing: 28.04.2000
(51) Int. Cl.: G02B 6/34, G02B 6/42, G02F 1/09

(54) **A wavelength dependent optical non-reciprocal device**

(30) Priority: 20.08.1999 US 377692
(71) Applicant: JDS Uniphase Inc., Nepean, Ontario K2G 5W8 (CA)
(72) Inventor: Ducellier, Thomas, Ottawa, Ontario K1N 6B9 (CA); Cheng, Yihao, Kanata, Ontario K2M 2L6 (CA)
(74) Representative: Cross, Rupert Edward Blount

(57) **Abstract**

A bi-directional wavelength dependent optical isolator is disclosed having two thick birefringent plates having their optical axes oriented such that their birefringent axes are oriented differently and a non-reciprocal element. The thick plates have a periodic wavelength response with polarization. In operation even channels are passed while odd channels are blocked in a first direction from port 1 to port 2 and conversely, even channels are blocked and odd channels are passed in a second opposite direction from port 2 to port 1.

## Description

### Field of the Invention

This invention relates to an arrangement of optical isolator components for providing wavelength dependent isolation or redirection having a first comb filter response in a first direction through the device different from a second comb filter response in a second opposite direction through the device.

### Background of the Invention

Optical isolators are one of the most ubiquitous of all passive optical components found in most optical communication systems. Optical isolators are generally used to allow signals to propagate in a forward direction but not in a backward direction. These isolators are often used prevent unwanted back reflections from being transmitted back to a signal's source.

One prior art polarization independent optical isolator is described in United States patent number 5,033,830 issued July 23, 1991 in the name of Jameson and entitled Polarization Independent Optical Isolator. Jameson describes an isolator having a single birefringent plate, a pair of stacked reciprocal rotators, a Faraday rotator, and a reflector positioned in tandem adjacent to the birefringent plate. In a forward (transmitting) direction, a lightwave signal exiting an optical fiber is split into a pair of orthogonal rays by the birefringent plate. The orthogonal rays then pass through a first reciprocal rotator and the Faraday rotator which provides 22.5° of rotation. The rotated rays are then redirected by the reflector back though the Faraday rotator. After passing through the second reciprocal rotator, the orthogonal rays re-enter the same birefringent plate where they are recombined and launched in an output fiber. Since a Faraday rotator is a non-reciprocal device, any signal traveling through the isolator in the reverse (isolation) direction will be split on both passes through the birefringent plate such that neither will intercept the input fiber.

An isolated optical coupler is disclosed in U.S. patent 5,082,343 in the name of Coult et al. issued Jan. 21, 1992. The coupler described in the patent is comprised of a pair of lenses having a wavelength selective device and an isolator disposed therebetween.

Another optical isolator which attempts to improve upon Coult's design is described in U.S. patent 5,594,821 in the name of Yihao Cheng.

Yet another optical isolator is described in United States patent number 5,267,078 in the name of Shiraishi et al.

Although these prior devices appear to provide their intended function of isolating in a unidirectional manner, substantially preventing light from propagating in a backward direction, only allowing light to pass in a forward direction, it is an object of this invention to provide a wavelength dependent isolator that in one mode of operation allows a first group of periodic wavelengths to pass in a first direction from a first port to a second port and which substantially prevents a second group of periodic wavelengths to pass while simultaneously allowing the second group of wavelengths to pass in a second direction from the second port to the first port while substantially preventing the first group of wavelengths from passing in a same direction.

It is an object of this invention to provide a two port isolator having a comb filter response that is different in one direction than the other.

Unlike prior art optical isolators generally used to allow signals to propagate in a forward direction but not in a backward direction, the isolator in accordance with an embodiment of this invention allows propagation of signals through the isolator in both directions from a first to a second port and vice versa wherein propagation is wavelength dependent and mutually exclusive with respect to wavelengths that are able to pass in each direction.

### Summary of the Invention

In accordance with the invention, there is provided, a wavelength dependent optical non-reciprocal device for isolating or redirecting a first plurality of spaced channels having predetermined centre wavelengths spaced by a predetermined channel spacing "d" in a first direction from a first end of the device to a second end of the device and for isolating or redirecting a second plurality of different channels having different predetermined centre wavelengths spaced by the channel spacing "d" in a second direction from the second end of the device to the first end of the device, the centre wavelengths of the second plurality of different channels being between the centre wavelengths of the first plurality of channels, the wavelength dependent isolator comprising:
means for allowing the first plurality of channels to pass from the first end to the second end and for substantially preventing the second plurality of channels from passing from the first end to the second end, and,
means for allowing the second plurality of channels to pass from the second end to the first end and for substantially preventing the first plurality of channels from passing from the second end to the first end.

In accordance with the invention there is further provided, a wavelength dependent optical device for isolating or redirecting light consisting of a first port and a second port and comprising means for allowing evenly spaced channels having predetermined centre wavelengths to pass from the first port to the second port and for substantially preventing oddly spaced channels having predetermined centre wavelengths between wavelengths corresponding to the evenly spaced channels from passing, and for allowing the oddly spaced channels to pass from the second port to the first port and for substantially preventing the evenly spaced channels from passing.

In accordance with another aspect of the invention there is provided, a method of isolating two streams of optical signals in a wavelength dependent manner, comprising the steps of:
passing a first stream of multiplexed optical channels through optical isolator components including a non-reciprocal rotator in a first direction from a first end to a second end for providing wavelength dependent isolation, the optical isolator components having a first comb filter response for passing the first stream of optical channels in the first direction through the isolator, and
passing a second stream of multiplexed optical channels through the optical isolator components including the non-reciprocal rotator in a second direction from the second end to the first end for providing wavelength dependent isolation, the optical isolator components having a second comb filter response for passing the second stream of optical channels in the second direction through the isolator, wherein the each centre wavelength of each channels of the first stream of channels and each centre wavelength of each channels of the second stream of channels are mutually exclusive.

In accordance with the invention there is further provided, a method of isolating a first stream of optical signals from a second stream of interleaved optical signals comprising the steps of:
providing a wavelength dependent optical isolator having a first port at one end and a second port at another end, and having a comb filter response, the optical isolator including at least two birefringent plates, and a Faraday rotator between the first and second ports and;
passing one of the first stream and the second stream through the isolator from one of the first and second ends to the other of the second and first ends.

### Brief Description of the Drawings

Exemplary embodiments of the invention will now be described in conjunction with the drawings in which:
Figs. 1a and 1b are side views of an optical circuit which is a bi-directional comb filter having a different wavelength response in each direction illustrating propagation of even only in a direction from left to right and odd channels only in a direction from right to left;
Figs 2a and 2b are side views similar to Fig. la and 1b without changing the polarization of the sub-beams which is done in Figs 1a and 1b;
Figs 3a and 3b illustrate a multi-stage device that can be designed to be dispersion free; and,
Figs. 4 and 5 are side views illustrating a reflective multi-stage dispersion-free device in accordance with an embodiment of this invention wherein a polarization beam splitter is used to fold the dual stage device.

### Detailed Description of the Drawings

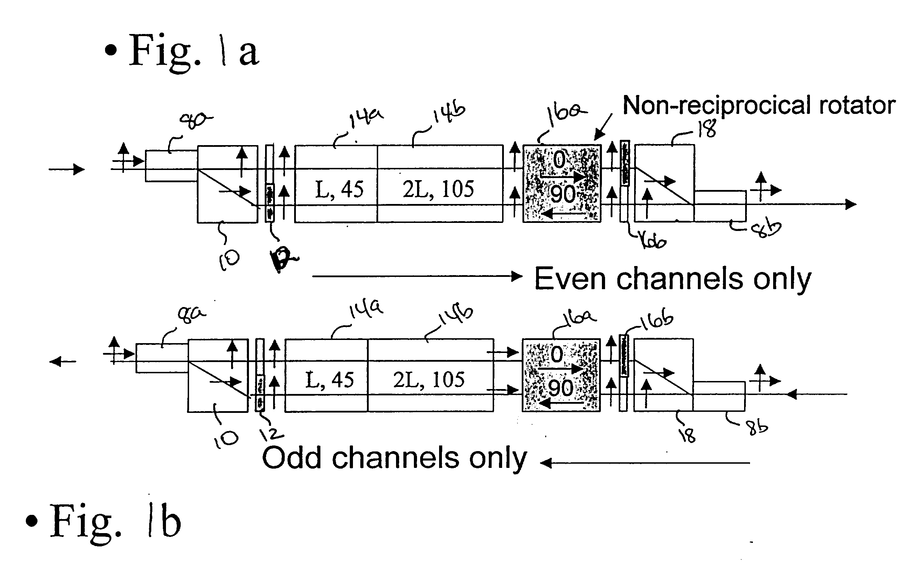

Turning now to Fig. 1a a wavelength dependent isolator is shown having a comb filter response that allows passage of even channels having centre wavelengths λ2, λ4, λ6, λ8....etc. while preventing the passage of odd channels having centre wavelengths λ1, λ3, λ5, λ7....etc. in a direction from port 1 at the left end to port 2 at the right end of the two port device. Conversely, the same device of Fig. 1b has a comb filter response that prevents passage of even channels having centre wavelengths λ2, λ4, λ6, λ8....etc., while allowing the passage of odd channels having centre wavelengths λ1, λ3, λ5, λ7....etc., in a direction from port 2 at the right end to port 1 at the left end of the two port device.

Between ports 1 and 2 which take the form of graded index (GRIN) lenses 8a and 8b respectively, are two blocks 14a and 14b of birefringent material such as thick waveplates having their axes of polarization diversity oriented differently; the fast and slow axes of the two blocks are arranged such that purposefully misaligned to provide a substantially flat-top periodic wavelength output response that corresponds to a desired comb filter response. In a preferred embodiment the first block 14a is half the length of the second block 14b and is oriented at 45° to vertically polarized incoming light and the second block is oriented at 105° to the vertically polarized incoming light. Between port 1 and the thick waveplate 14a is rutile crystal 10 for splitting incoming light into two orthogonally polarized beams of light followed by a waveplate 12 which rotates the polarization of one of the two orthogonally polarized beams to ensure that the two polarized beams are both oriented in a same manner as they pass through the waveplates 14a and 14b. Between the thickest waveplate 14b and port 2 is a similar arrangement of elements including a rutile crystal 18 identical to crystal 10 however oriented differently and a waveplate 18. However the addition of a non-reciprocal rotator in the form of a Faraday rotator 16a with a waveplate in combination with the components described provides a bi-directional comb filter having a different wavelength response from port 1 to 2 than from port 2 to 1.

Although similar filters having a periodic wavelength response are know to be used in interleaver type filtering applications, the inclusion of the Faraday rotator and waveplate provide mutually exclusive operation such that even channels are allowed to pass in one direction filtering or preventing odd channels in a same direction while allowing odd channels to pass in an opposite direction while preventing even channels to pass in a same direction.

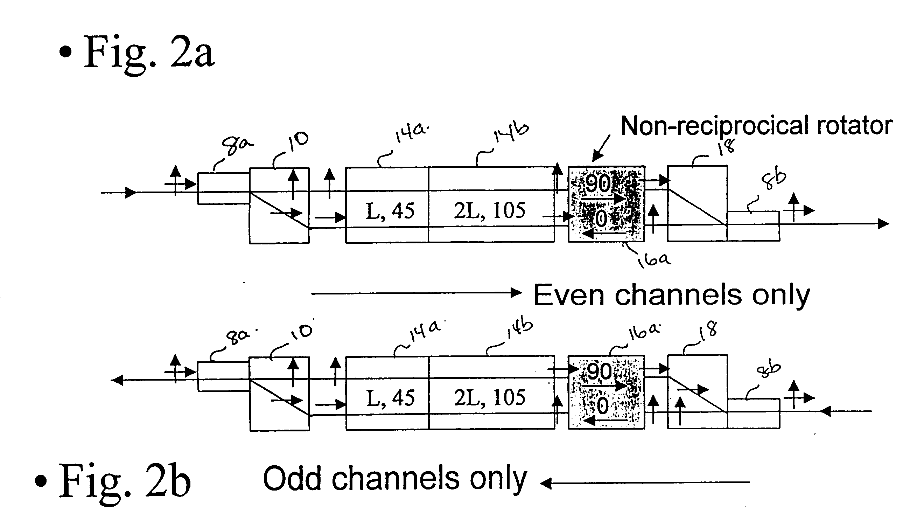

Figs. 2a and 2b illustrate a different embodiment wherein the waveplate 16b and waveplate 12 shown in Figs. 1a and 1b is not required.

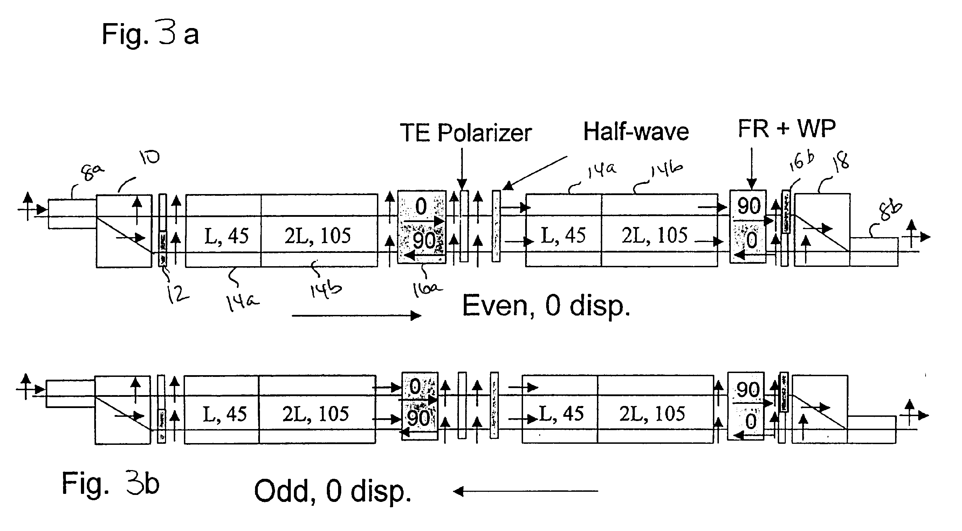

Heretofore, a single-stage wavelength sensitive non-reciprocal optical device has been described. Turning now to Figs. 3a and 3b, a multiple stage in the form of a dual stage device is provided which offers additional isolation of unwanted channels. To realize such a multiple stages device, thick cascaded waveplate stacks and non-reciprocal rotators are provided having a polarizing element in between each of these stages.

A further specific advantage of dual stage or more generally N-stage with N an even number is that one can design the stages in such a way as to achieve dispersion free operation.

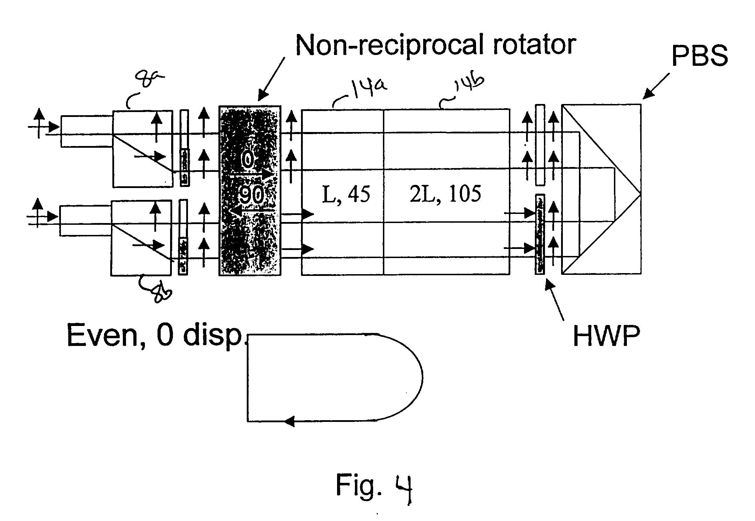

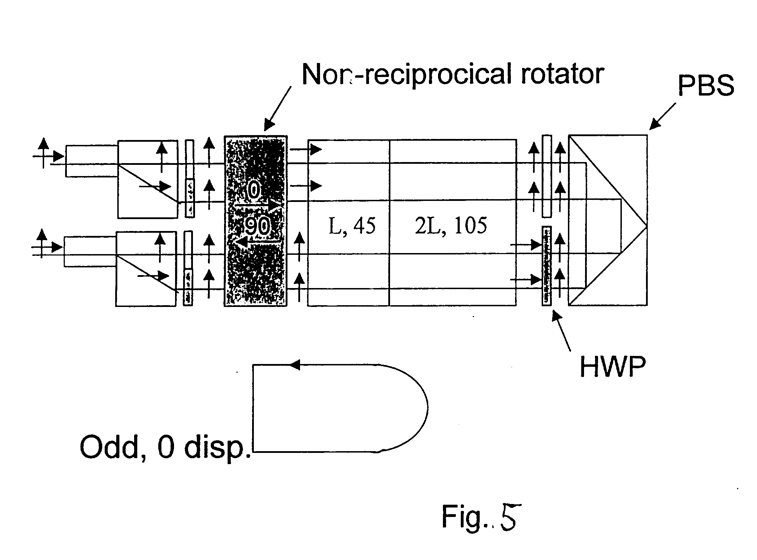

In transmission, such a result can be obtained by cascading a first stage where all incoming beams are oriented in TE, with a second stage where all incoming beams are oriented in TM as shown for example in Figs. 3a and 3b. In reflection, a similar result can be obtained with a proper choice of beam polarization orientations for example, as per Figs. 4 and 5.

Of course, numerous other embodiments can be envisaged, without departing from the spirit and scope of the invention.

## Claims

1. A wavelength dependent optical non-reciprocal device for isolating or redirecting a first plurality of spaced channels having predetermined centre wavelengths spaced by a predetermined channel spacing "d" in a first direction from a first end of the device to a second end of the device and for isolating or redirecting a second plurality of different channels having different predetermined centre wavelengths spaced by the channel spacing "d" in a second direction from the second end of the device to the first end of the device, the centre wavelengths of the second plurality of different channels being between the centre wavelengths of the first plurality of channels, the wavelength dependent isolator comprising:
means for allowing the first plurality of channels to pass from the first end to the second end and for substantially preventing the second plurality of channels from passing from the first end to the second end, and,
means for allowing the second plurality of channels to pass from the second end to the first end and for substantially preventing the first plurality of channels from passing from the second end to the first end.

2. A wavelength dependent optical device as defined in claim 1 wherein one of the first and second plurality of spaced channels are even channels and wherein the other of the second and the first plurality of channels are odd channels.

3. A wavelength dependent optical device as defined in claim 1 wherein the device is substantially polarization independent.

4. A wavelength dependent optical device as defined in claim 1 including a first and a second waveplate optically coupled to a Faraday rotator.

5. A wavelength dependent optical device as defined in claim 4, wherein the first and second waveplates have optical axes of polarization oriented differently.

6. A wavelength dependent optical device as defined in claim 1 including a non-reciprocal rotating element and at least two birefringent plates of different thicknesses and having axes of polarization oriented differently.

7. A wavelength dependent optical device as defined in claim 6 including first means at or near the first end for dividing an input beam into two orthogonally polarized beams.

8. A wavelength dependent optical device as defined in claim 7 including second means at or near the second end for dividing an input beam into two orthogonally polarized beams.

9. A wavelength dependent optical device as defined in claim 8 including a first reciprocal rotating means disposed between the first means and the two birefringent plates for rotating the polarization of one of the two orthogonally polarized beams.

10. A wavelength dependent optical device as defined in claim 9 including a second reciprocal rotating means disposed between the second means and the two birefringent plates for rotating the polarization of one of the two orthogonally polarized beams.

11. A wavelength dependent optical device as defined in claim 10 wherein the two birefringent plates are waveplates oriented substantially at 45° and 105° respectively to an incoming polarized beam.

12. A wavelength dependent optical device as defined in claim 11 wherein the first waveplate is half the thickness of the second waveplate.

13. A wavelength dependent optical device for isolating or redirecting light consisting of a first port and a second port and comprising means for allowing evenly spaced channels having predetermined centre wavelengths to pass from the first port to the second port and for substantially preventing oddly spaced channels having predetermined centre wavelengths between wavelengths corresponding to the evenly spaced channels from passing, and for allowing the oddly spaced channels to pass from the second port to the first port and for substantially preventing the evenly spaced channels from passing.

14. A method of isolating two streams of optical signals in a wavelength dependent manner, comprising the steps of:
passing a first stream of multiplexed optical channels through optical isolator components including a non-reciprocal rotator in a first direction from a first end to a second end for providing wavelength dependent isolation, the optical isolator components having a first comb filter response for passing the first stream of optical channels in the first direction through the isolator, and
passing a second stream of multiplexed optical channels through the optical isolator components including the non-reciprocal rotator in a second direction from the second end to the first end for providing wavelength dependent isolation, the optical isolator components having a second comb filter response for passing the second stream of optical channels in the second direction through the isolator, wherein each centre wavelength of each channels of the first stream of channels and each centre wavelength of each channels of the second stream of channels are mutually exclusive.

15. A method of isolating two streams of optical signals as defined in claim 14, wherein the first stream and the second stream are passed through the isolator in opposite directions simultaneously.

16. A method of isolating a first stream of optical signals from a second stream of interleaved optical signals comprising the steps of:
providing a wavelength dependent optical isolator having a first port at one end and a second port at another end, and having a comb filter response, the optical isolator including at least two birefringent plates, and a Faraday rotator between the first and second ports and;
passing one of the first stream and the second stream through the isolator from one of the first and second ends to the other of the second and first ends.
